Europäisches Patentamt

European Patent Office

Office européen des brevets

(19)

(11) **EP 0 605 045 B1**

(12) **FASCICULE DE BREVET EUROPEEN**

(45) Date de publication et mention
de la délivrance du brevet:
**31.03.1999 Bulletin 1999/13**

(51) Int Cl.⁶: **H04N 7/18**

(21) Numéro de dépôt: **93203620.5**

(22) Date de dépôt: **22.12.1993**

(54) **Procédé et dispositif de traitement d'images pour construire une image à partir d'images adjacentes**

Bildverarbeitungsverfahren und -vorrichtung zum Erzeugen eines Bildes aus mehreren angrenzenden Bildern

Image processing method and apparatus for generating one image from adjacent images

(84) Etats contractants désignés:
**DE FR GB IE**

(30) Priorité: **29.12.1992 FR 9215836**

(43) Date de publication de la demande:
**06.07.1994 Bulletin 1994/27**

(73) Titulaires:
 • **LABORATOIRES D'ELECTRONIQUE PHILIPS S.A.S.**
  **94450 Limeil-Brévannes (FR)**
  Etats contractants désignés:
  **FR**
 • **Koninklijke Philips Electronics N.V.**
  **5621 BA Eindhoven (NL)**
  Etats contractants désignés:
  **DE GB IE**

(72) Inventeurs:
 • **Lelong Pierre**
  **F-75008 Paris (FR)**
 • **Dalm, Govert**
  **F-75008 Paris (FR)**
 • **Klijn, Jan**
  **F-75008 Paris (FR)**

(74) Mandataire: **Lottin, Claudine et al**
  **Société Civile S.P.I.D.**
  **156, Boulevard Haussmann**
  **75008 Paris (FR)**

(56) Documents cités:
  EP-A- 0 238 340          WO-A-86/01592
  US-A- 4 660 157          US-A- 4 677 576
  US-A- 4 740 839          US-A- 5 023 725

## Description

L'invention concerne un procédé de traitement d'images, pour construire une image dite cible, à partir d'images adjacentes, de cadrage fixe, appelées images sources, lesdites images sources ayant des points de fuite substantiellement confondus.

L'invention concerne également un dispositif de traitement d'images mettant en oeuvre ce procédé.

L'invention trouve son application dans le domaine de la télésurveillance, ou bien dans le domaine de la télévision, lorsque des prises de vue couvrant des grands champs sont nécessaires par exemple dans le cas d'enregistrement de scènes de manifestations sportives.

L'invention trouve aussi son application dans le domaine de la construction automobile pour réaliser des rétroviseurs périphériques et panoramiques sans angle mort.

Un dispositif de traitement d'image est déjà connu de la demande de brevet WO92-14341. Ce document décrit un système de traitement d'image appliqué à la télévision. Ce dispositif comprend une station émettrice incluant une pluralité de caméras fixes arrangées de manière adjacente pour que leurs champs de vue fusionnent et forment un champ de vue de grand angle. Ce système comprend aussi une station de traitement incluant des moyens pour générer un signal vidéo composite de la totalité de l'image correspondant au champ de vue de grand angle, et des moyens pour sélectionner une sous-image de cette image composite. Ce système comprend enfin des moyens, c'est-à-dire un moniteur, pour afficher cette sous-image. Cette sous-image correspond à un champ de vue d'angle inférieur à celui de l'image composite dit sous-section du champ de vue de grand angle.

Ce dispositif de traitement d'image est applicable uniquement aux systèmes de télévision classiques, où l'image est formée au moyen d'un faisceau de balayage ligne après ligne.

La station de traitement permet à un utilisateur d'opérer lui-même la sélection de la sous-section du champ de vue de grand angle. La sous-image correspondante a la même dimension que l'image fournie par une caméra individuelle. L'utilisateur sélectionne cette sous-image en faisant varier le point de départ du balayage vis-à-vis de l'image composite correspondant au champ de vue de grand angle. Le champ de vue de grand angle a un axe parallèle au balayage vidéo, d'où il résulte que le point de départ du balayage vidéo de la sous-image peut être déplacé arbitrairement et continuement parallèlement à cet axe.

Eventuellement, l'angle du champ de vue auquel la sous-image correspond peut être inférieur à celui d'une caméra réelle. Mais la localisation de la sous-image n'inclut pas de déplacement perpendiculairement au balayage ; sa localisation inclut seulement des déplacements parallèlement à ce balayage. Et la formation de cette sous-image n'inclut pas d'effet de zoom vis-à-vis de l'image composite, c'est-à-dire de changement de focale de la sous-image vis-à-vis de la focale des caméras de prise de vue.

Donc la station de traitement d'image comprend des moyens pour construire ligne après ligne la sous-image vidéo sélectionnée. Ces moyens incluent essentiellement un circuit de contrôle de la synchronisation des signaux vidéo des différentes caméras.

La présente invention a pour but de fournir un dispositif capable de simuler une caméra mobile, balayant le champ de vue de grand angle couvert par les n caméras fixes dont les champs de vue fusionnent.

Le but de la présente invention est tout particulièrement de fournir un tel dispositif simulant une caméra munie de toutes les facilités que pourraient avoir une caméra mobile existant réellement : c'est-à-dire à partir d'un observateur qui est fixe, des possibilités de déplacements angulaires horizontaux vers la gauche ou la droite d'une scène panoramique à observer ou à surveiller, des possibilités de déplacements angulaires verticaux vers le haut ou vers le bas de cette scène, des possibilités de rotation, et en outre des possibilités de zoom sur une partie de la surface de cette scène.

Ce but est atteint en mettant en oeuvre un procédé de traitement d'images selon la revendication 1.

Selon l'invention, pour mettre en oeuvre ce procédé, on propose en outre un dispositif de traitement d'images selon la revendication 5.

Ainsi, le dispositif selon l'invention permet de réaliser la construction d'une image cible comme celle que fournirait une caméra supposée, se déplaçant de manière continue ; cette image cible est formée à partir de plusieurs images sources adjacentes fournies chacune par une caméra du groupe de caméras disposées de manière fixe vis-à-vis de la scène à observer ; et, à partir de cette construction, ce dispositif peut fournir, par l'affichage sur écran, ou par enregistrement :

- soit une restitution séquentielle, image par image, de partitions de la scène observée, avec éventuellement effet de zoom,
- soit une restitution continue par balayage de la scène observée avec effet de site et d'azimut ou de rotation.

Dans une mise en oeuvre particulière, ce dispositif est réalisé selon la revendication 6.

Un autre problème technique se pose à la construction de l'image cible. En effet, on suppose que l'on dispose d'une pluralité de caméras positionnées de manière adjacentes et de telle sorte que le champ couvert par chacune ne laisse échapper aucune zone de la scène panoramique à construire : on suppose donc que l'on dispose de toutes les données pour construire l'image cible. Néanmoins, à chaque frontière entre les caméras, au passage d'une image d'une caméra, à une autre image d'une caméra adjacente, la différence d'angle de visée de ces deux caméras, pour deux zones adjacentes de la scène enregistrées par ces deux caméras différentes, crée de grandes distorsions d'image. Il en résulte que les partitions qui sont réalisées à cheval sur deux zones de la scène enregistrée par deux caméras différentes sont très inconfortables à visualiser et manquent totalement de précision.

Un autre but de l'invention est donc de fournir une telle construction d'image cible qui est corrigée en distorsion d'image à la frontière entre deux caméras, de telle sorte que cette ou ces frontières soit(soient) totalement invisible(s) par l'utilisateur.

Ce but est atteint au moyen d'un dispositif de traitement d'images selon la revendication 7.

Dans une mise en oeuvre particulière, ce dispositif est réalisé selon la revendication 8.

Avec ce dispositif, l'utilisateur qui surveille une scène panoramique obtient exactement le même confort, et les mêmes services qu'un utilisateur qui disposerait d'une caméra mobile, avec zoom, et avec des moyens mécaniques pour réaliser la variation de l'orientation de l'axe optique, c'est-à-dire pour réaliser des variations de site et d'azimut de la visée, ainsi que des rotations autour de l'axe optique de la caméra. L'avantage est que les moyens mécaniques sont évités. Ces moyens mécaniques, qui incluent des moteurs de rotation mécanique d'angles de site et d'azimut, et un moteur de réglage du zoom, sont toujours liés à des inconvénients : d'abord ils peuvent se bloquer, ensuite les déplacements engendrés sont très lents. De plus, il sont très onéreux. Enfin, étant le plus souvent installés en extérieur, ils se dégradent rapidement du fait des intempéries. Les moyens électroniques de traitement d'image utilisés selon l'invention évitent tous ces inconvénients, car ils sont très précis, fiables, très rapides et faciles à commander. En outre, ils peuvent être disposés en intérieur, et ainsi à l'abri des intempéries. De plus, les moyens électroniques sont facilement programmables pour un fonctionnement automatique. Enfin, ils sont moins onéreux que les moyens mécaniques.

Ainsi l'utilisateur obtient, avec les moyens de l'invention, d'abord une image dépourvue de distorsions et ensuite des plus grandes précisions, et facilités d'exécution des manoeuvres de visée, que s'il disposait de moyens mécaniques. En outre, une scène panoramique de plus grand champ peut être observée, puisque l'on peut observer des champs de 180° ou même 360° selon le nombre de caméras utilisées. Par ailleurs, les manoeuvres peuvent être aisément programmées.

En matière de surveillance, il en résulte un grand progrès. Dans le domaine de la réalisation de rétroviseurs panoramiques pour automobiles, l'importance du progrès est aussi très grande.

Le fait d'utiliser plusieurs caméras pour faire la saisie des données nécessaires à la construction de l'image cible n'est pas un désavantage, car un tel ensemble de caméras fixes, à CCD (dispositif à couplage de charge), est devenu moins onéreux que ne le seraient les dispositifs mécaniques de variation de site, d'azimut et de rotation, ainsi que de zoom, associés à une seule caméra réelle mobile.

Dans une mise en oeuvre particulière ce système est réalisé selon l'une des revendications dépendantes.

L'invention est décrite ci-après en détail, en référence avec les figures schématiques annexées dont :

- la FIG.1A représente une vue du dessus montrant les traces des différents plans images, dans le plan horizontal du repère terrestre, dans le cas où les caméras réelles ont des plans images perpendiculaires à ce plan horizontal ;
- la FIG.1B représente le repère terrestre Px, Py, Pz, vu en projection dans le plan horizontal ;
- la FIG.1C représente en vue plane, un plan image source avec son système d'axes de coordonnées particulier ;
- la FIG.1D représente en vue plane, le plan image cible avec son système d'axes de coordonnées particulier ;
- la FIG.1E représente l'effet de la délimitation d'une section du champ de vue de grand angle de deux caméras réelles adjacentes, au moyen des paramètres choisis par l'utilisateur pour la caméra virtuelle, pour construire une sous-image d'une scène panoramique ;
- la FIG.1F représente l'image cible construite par la caméra virtuelle définie par ces paramètres, cette image cible étant composée d'une première partie d'image construite à partir de l'image source fournie par la première des deux caméras réelles, et d'une seconde partie d'image construite à partir de l'image source fournie par la seconde de ces caméras;
- la FIG.1G représente une disposition relative de trois caméras réelles adjacentes pour couvrir un champ de vue de 180° ;
- la FIG.2 qui représente en blocs fonctionnels le dispositif de traitement d'image avec le système de construction de l'image cible, les caméras réelles, l'interface-utilisateur et le système de visualisation de l'image cible ;
- la FIG.3 qui représente le dispositif de traitement d'image sous forme de blocs fonctionnels plus détaillés que la FIG.2 ;
- la FIG.4 qui illustre le calcul d'une valeur d'une fonction de luminance relativement à une adresse dans une image source ;
- la FIG. 5A qui illustre la modélisation des caméras réelle et virtuelle ;
- la FIG.5B qui illustre en projection sur le plan horizontal du repère terrestre, l'effet des perspective et distorsion sur les positions des points correspondants de même luminance dans l'image cible et dans l'image source traversées par un même rayon lumineux passant par ces points ;

- la FIG.6 qui représente, sous forme de blocs fonctionnels, le calculateur d'adresse qui calcule l'adresse du point dans l'image source, correspond à un pixel à une adresse donnée dans l'image cible ;
- la FIG.7A qui représente une première image source numérique telle que formée par une première caméra fixe réelle et la FIG.7B qui représente une seconde image source telle que formée par une seconde caméra fixe réelle adjacente à la première
- la FIG.7C représente une image cible numérique reconstruite de la même façon que dans le cas de la FIG. 1F, sur laquelle est mise en évidence les défauts de distorsion et perspective entre la première partie d'image cible construite à partir de la première image source, et la seconde partie d'image cible construite à partir de la seconde image source ;
- la FIG.7D représente l'image cible numérique de la FIG.7C après traitement par le dispositif de traitement d'image où les défauts de distorsion et perspective sont éliminés.

## I/ __Le système de prise de vue__

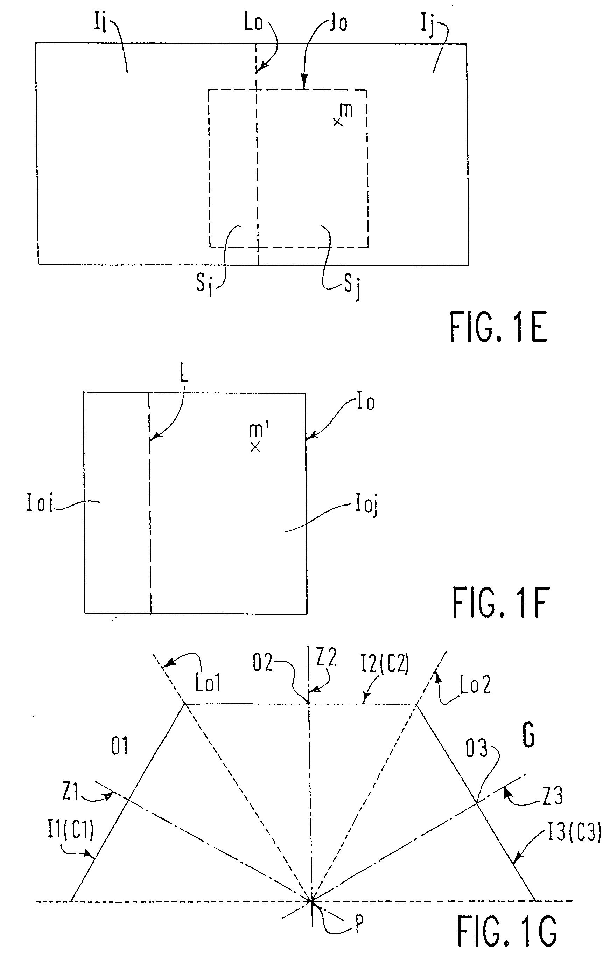

La Fig.1G montre une disposition possible de plusieurs caméras fixes réelles pour enregistrer les données relatives à une scène de 180° d'angle. L'enregistrement de cette scène panoramique est fait avec trois caméras fixes C1, C2, C3. Les champs optiques des caméras sont tels qu'absolument tous les détails de la scène panoramique sont enregistrés par une caméra ou par une autre, de manière à ne laisser échapper aucun objet de la surveillance. Les caméras sont disposées de manière à avoir un point de fuite commun P (en anglais : VIEW POINT) ou des points de fuite très proches.

Les axes PZ1, PZ2, PZ3 représentent respectivement les axes optiques des caméras C1, C2, C3 ; et les points 01, 02, 03 représentent respectivement les centres géométriques des images I1, I2, I3, dans les plans images, sur les axes optiques.

On pourrait effectuer une surveillance horizontale sur 360° en disposant de manière appropriée 6 caméras fixes. Mais on pourrait aussi effectuer une surveillance verticale, ou dans les deux directions. L'homme du métier peut, sans description plus approfondie des diverses dispositions des caméras fixes les unes vis-à-vis des autres, réaliser toute sorte d'observation d'une scène panoramique.

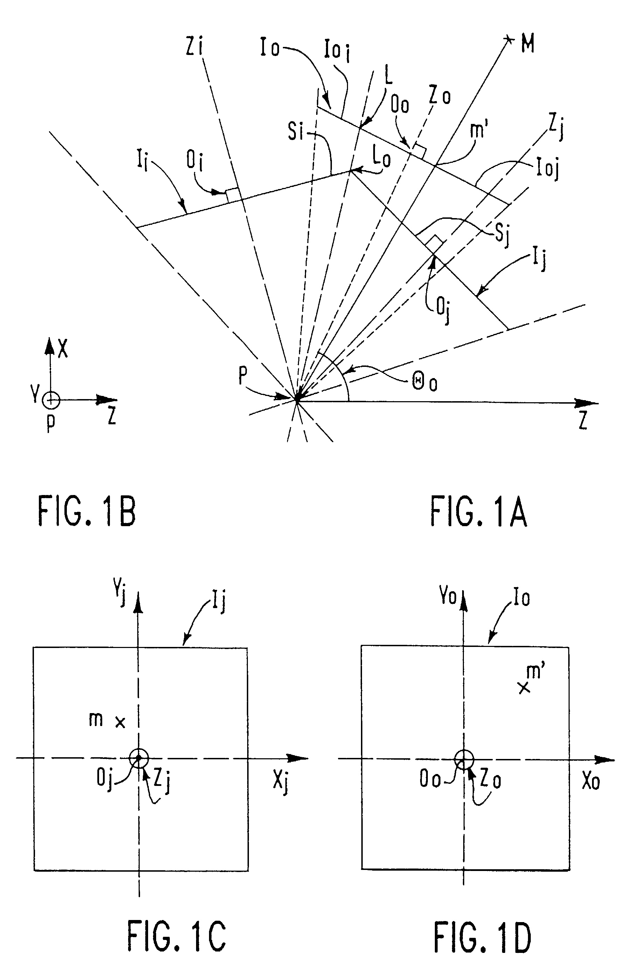

En référence avec la FIG. 1A, le dispositif de prise de vue comprend une pluralité de n caméras réelles fixes, de focales fixes et connues, disposées de manière adjacente, et de telle sorte que leurs champs de vue individuels fusionnent pour couvrir un champ de vue de grand angle. Ainsi, les n caméra fixes adjacentes fournissent n images fixes adjacentes, de sorte que ce dispositif de prise de vue peut surveiller une scène panoramique. Les champs optiques de caméras sont tels que tous les détails de la scène panoramique sont enregistrés par une caméra ou par une autre, pour ne laisser échapper aucun objet de la surveillance.

Pour obtenir ce résultat, ces n caméras fixes adjacentes sont en outre disposées de telle sorte que leurs centres optiques P, encore appelés points de fuite (ou VIEW POINT en anglais) coïncident. Le point de fuite d'une caméra est défini comme le point tel que tout rayon issu d'une source lumineuse et passant par ce point, traverse l'optique de la caméra sans déviation.

En fait, les points de fuite des n caméras ne peuvent pas physiquement coïncider. Mais on considère ci-après que la condition de coïncidence est suffisamment bien remplie si la distance qui sépare chacun de ces points de fuite les uns des autres est petite vis-à-vis de leur distance à la scène panoramique filmée, par exemple si leur distance respective est 5 cm ou 10 cm, et la distance à la scène panoramique est 5 m. Ainsi la condition de coïncidence est estimée remplie si le rapport de ces distances est de l'ordre de, ou supérieur à, 50, et il n'est pas besoin, selon l'invention, d'utiliser des optiques à miroirs difficiles à ajuster, et coûteuses, pour arriver à une coïncidence rigoureuse des points de fuite.

## II/ __La formation des images par les caméras__

Le but de l'invention est de fournir un système de reconstruction d'image numérique qui simule une caméra mobile capable, avec des réglages choisis par un utilisateur, de fournir une image numérique de n'importe quelle partie, ou sous-image, de la scène panoramique enregistrée par les n caméras fixes.

Les n caméras sont numérotées C1.... Ci, Cj... . Cn ; ces caméras fournissent respectivement des images dites sources numériques I1..., Ii, Ij..., In. Dans ce qui suit, on considérera par exemple les images sources Ii et Ij formées par deux caméras réelles fixes adjacentes Ci et Cj.

Ces caméras Ci et Cj réelles fixes forment des images respectives de la scène panoramique dans des plans images sources adjacents Ii et Ij. Sur la FIG. 1A, les axes PZi et PZj, passant respectivement par les centres géométriques Oi et Oj des images sources Ii et Ij, représentent les axes optiques des caméras réelles fixes Ci et Cj.

En référence avec la FIG. 1B, on définit d'abord un repère terrestre Px, Py, Pz, d'axes orthogonaux dans lequel les axes Px et Pz sont horizontaux, et l'axe Py est vertical.

Les images sources, telles que les images Ii et Ij, sont numérisées, et chaque pixel m de ces images est repéré par ses coordonnées dans le plan image. A cet effet, comme représenté sur la FIG.1C, on définit dans chaque plan image un repère de coordonnées rectangulaires $(O_iX_i, O_iY_i)$ et $(O_jX_j, O_jY_j))$ dans lequel les axes $O_iX_i$, ou $O_jX_j$, sont horizontaux, c'est-à-dire dans le plan du repère terrestre Px, Pz. Les plans images définis par $(O_iX_i, O_iY_i)$ et $(O_jX_j, O_jY_j)$ sont perpendiculaires aux axes optiques $PZ_i$, et $PZ_j$ et ont pour centres géométriques $O_i$ et $O_j$ respectivement.

Une fois établis les repères individuels liés à chaque plan image des caméras, ces plans images sources fixes peuvent être liés au repère terrestre par :

- leur angle d'azimut (en anglais PAN) $\Theta_i$, $\Theta_j$,
- leur angle de site (en anglais TILT) $\Phi_i$, $\Phi_j$.

L'angle d'azimut $\Theta_i$ ou $\Theta_j$, est l'angle que fait un plan vertical contenant l'axe optique $PZ_i$ ou $PZ_j$, avec l'axe horizontal Pz du repère terrestre. C'est donc un angle de rotation horizontale autour de l'axe vertical Py.

L'angle de site $\Theta_i$ ou $\Theta_j$ est l'angle que fait l'axe optique $PZ_i$ ou $PZ_j$ avec le plan horizontal (Px, Pz). C'est donc un angle de rotation verticale autour d'un axe horizontal, l'axe $O_iX_i$ ou $O_jX_j$ de chaque plan image.

Dans l'exposé ci-après, pour des raisons de simplicité, on a supposé, à titre d'exemple, en référence avec la FIG.1A que les plans images Ii, Ij sources fournis par les caméras fixes Ci, Cj étaient verticaux, c'est-à-dire que leurs angles de site $\Phi_i$, $\Phi_j$ étaient nuls.

Pour des raisons de simplicité également, on a noté par la même référence sur la FIG. 1A la trace des plans et des axes, et les plans et axes correspondants, aussi bien pour les images sources que pour l'image cible décrite plus loin.

La FIG.1A, qui est une vue du dessus schématique des images formées, laisse donc apparaître seulement les traces Ii et Ij des plans images sources fixes représentées par des segments dans le plan horizontal Px, Pz.

La FIG.1E montre par exemple les images Ii et Ij contiguës de la scène panoramique fournies par deux caméras fixes Ci et Cj adjacentes. Sur la FIG. 1E, pour la simplicité de l'exposé, les images Ii et Ij sont représentées toutes les deux projetées dans un même plan, alors que dans la réalité, ces images font entre elles un angle égal à celui des axes optiques des caméras fixes. Dans ces images, l'utilisateur peut choisir de regarder n'importe quelle sous-image délimitée par la ligne Jo, plus ou moins à gauche ou à droite, plus ou moins en haut ou en bas, avec le même grandissement que les caméras fixes, ou avec un grandissement supérieur, ou éventuellement avec un grandissement inférieur.

La caméra mobile simulée est capable de construire une image dite cible Io à partir des parties d'image source Si, Sj délimitées par la ligne Jo de la FIG. 1E. Cette caméra référencée Co ci-après est appelée caméra virtuelle du fait qu'elle simule une caméra non réellement existante. Evidemment cette caméra mobile n'est pas limitée à explorer les deux images Ii, Ij. Elle peut explorer toutes les images sources de I1 à In.

Cette caméra virtuelle Co peut être définie de la même façon que les caméras réelles fixes par :

- son angle d'azimut $\Theta_o$
- son angle de site $\Phi_o$
- son angle de rotation $\psi_o$
- et son grandissement (effet de zoom) concrétisé par sa longueur focale $PO_o$, notée zo,

à condition de choisir son point de fuite P confondu avec les points de fuite P des caméras réelles fixes, $O_o$ étant le centre géométrique de l'image cible Io. Le point de fuite de la caméra virtuelle est confondu avec le point de fuite approximatif défini plus haut pour les caméras réelles.

La FIG. 1A montre la trace notée Io du plan image de la caméra virtuelle dans le plan horizontal et son axe optique $PZ_o$ passant par le centre géométrique $O_o$ de l'image cible Io.

Dans la définition de cette caméra virtuelle Co mobile, l'angle d'azimut $\Theta_o$ est l'angle que fait le plan vertical contenant son axe optique $PZ_o$ avec l'axe Pz horizontal du repère terrestre ; l'angle de site $\Phi_o$ est l'angle que fait son axe optique $PZ_o$ avec le plan horizontal Px, Pz du repère terrestre ; son angle $\psi_o$ est l'angle de rotation de la caméra virtuelle autour de son propre axe optique, ce dernier étant fixe ; enfin, sa focale $PO_o$ est variable, ce qui permet de changer le grandissement de cette image cible par rapport à celui des images sources (effet de ZOOM).

Ainsi, en faisant varier les angles d'azimut et de site, $\Theta_o$ et $\Phi_o$, son angle de rotation $\psi_o$ et la focale $PO_o$, la caméra virtuelle est tout à fait assimilable à une caméra mobile qui balaye le champ de vue de grand angle formé par les champs de vue fusionnés des différentes caméras réelles fixes C1 à Cn.

On remarquera que la caméra virtuelle Co peut viser une partie petite (ou sous-section), délimitée par Jo, du champ de vue de grand angle et en réaliser une image agrandie Io par exemple de même dimension finale que chacune des images I1...In fournie par chacune des caméras réelles C1... Cn, en jouant sur sa focale variable POo.

On remarquera également que le déplacement du champ de vue de la caméra mobile Co peut être continu et arbitraire ; ce champ de vue correspondant à Jo peut se trouver à cheval sur deux parties (Si,Sj) d'image Ii et Ij contigües en LO, fournies par deux caméras adjacentes Ci et Cj.

Dans ce cas, l'image Io construite par la caméra virtuelle Co contient deux parties d'image différentes, l'une Ioi étant construite à partir des informations Si contenues dans l'image numérique Ii, et l'autre Ioj étant construite à partir des informations Sj contenues dans l'image numérique Ij. Dans la FIG.1A, Ioi et Ioj représentent les traces des images cibles Ioi et Ioj dans le plan horizontal.

Comme pour les images réelles, on définit maintenant, en référence avec la FIG.1D, dans le plan de l'image cible numérique Io, un repère de coordonnées rectangulaires (Oo Xo, Oo Yo) dans lequel l'axe Oo Xo est horizontal, c'est-à-dire dans le plan horizontal du repère terrestre Px, Pz. Le pixel Oo étant le centre géométrique de l'image cible Io, en outre situé sur l'axe optique PZo de la caméra virtuelle Co. Chaque pixel m' du plan image cible Io est donc repéré par ses coordonnées dans ce système d'axes rectangulaires (Oo Xo, Oo Yo).

On définit également un cadrage de l'image cible, c'est-à-dire ses dimensions en nombre de pixels selon la direction horizontale et nombre de lignes selon la direction verticale.

### III/ La méthode de construction de l'image cible à partir des images sources

La tâche des moyens de traitement d'images numériques selon l'invention est donc la construction de "l'image cible" fournie par la caméra virtuelle, à partir des "images sources" fournies par les caméras réelles fixes.

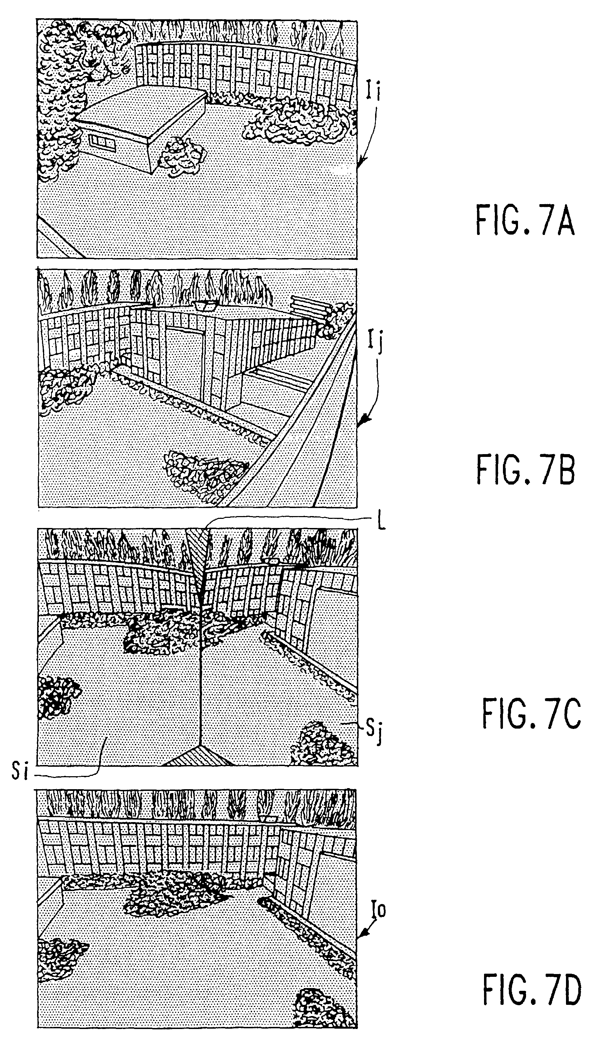

On a vu que, dans la construction de l'image cible Io, se posait un problème technique parce que les images Ii et Ij fournies par les caméras réelles adjacentes, telles que représentées sous forme d'images numériques de paysage sur les FIG.7A et 7B, respectivement montrent des distorsions qui font qu'elles ne se raccordent pas correctement : en particulier certaines parties de lignes droites sont courbes, les verticales ne sont pas verticales etc. Ce qui fait que, au raccord, ces lignes vont être sécantes au lieu d'être dans le prolongement les unes des autres. De plus, les parties d'images sources de part et d'autre du raccord proviennent de parties de la scène panoramique à observer qui sont vues sous des perspectives différentes. D'où il résulte que les parties d'image cible Ioi et Ioj pourraient être mal raccordées, comme il apparaît dans l'image numérique cible représentée à titre d'exemple sur la FIG.7C et formée par la juxtaposition pure et simple des parties des images numériques des FIG.7A et 7B.

La présente invention propose une méthode et des moyens pour s'affranchir de ces défauts et fournir une image numérique reconstruite qui est dépourvue des défauts de distorsions et de perspectives, et dont les parties Ioi, Ioj qui la composent se raccordent de manière telle que la droite frontière est invisible pour l'observateur et utilisateur.

La FIG.7D montre l'image numérique du paysage de la FIG.7C dans laquelle les défauts de distorsion et perspective ont été corrigés par les moyens de l'invention.

La méthode générale de construction de l'image source comprend différentes étapes qui sont mises en oeuvre par le dispositif de traitement de signal décrit plus loin.

Cette méthode comprend d'abord une étape où :

- à chaque pixel m' ayant une adresse Ao dans l'image cible Io, on fait correspondre un point m à une adresse Aq dans une image source, cette adresse étant définite par :
- la référence ou index de la caméra réelle qui va fournir l'image source ;
- l'adresse Aq du point m dans cette image source. Cette méthode comprend alors une seconde étape où :
- la valeur la plus probable de la luminance est évaluée en ce point m de l'image source,
- puis cette valeur de luminance est affectée au pixel m' dans l'image cible.

Ces étapes sont menées pour tous les pixels m' de l'image cible Io.

Cependant, les moyens de traitement doivent rendre à l'image cible construite, toutes les qualités d'une image que l'observateur obtiendrait avec une caméra mobile conventionnelle :

- absence de distorsions, ajustage des perspectives,
- absence de droite de coupure à la frontière entre deux ou plusieurs images adjacentes.

Le problème est donc de rendre ces droites frontières invisibles.

### IV/ Le dispositif de traitement d'image dans ses éléments essentiels

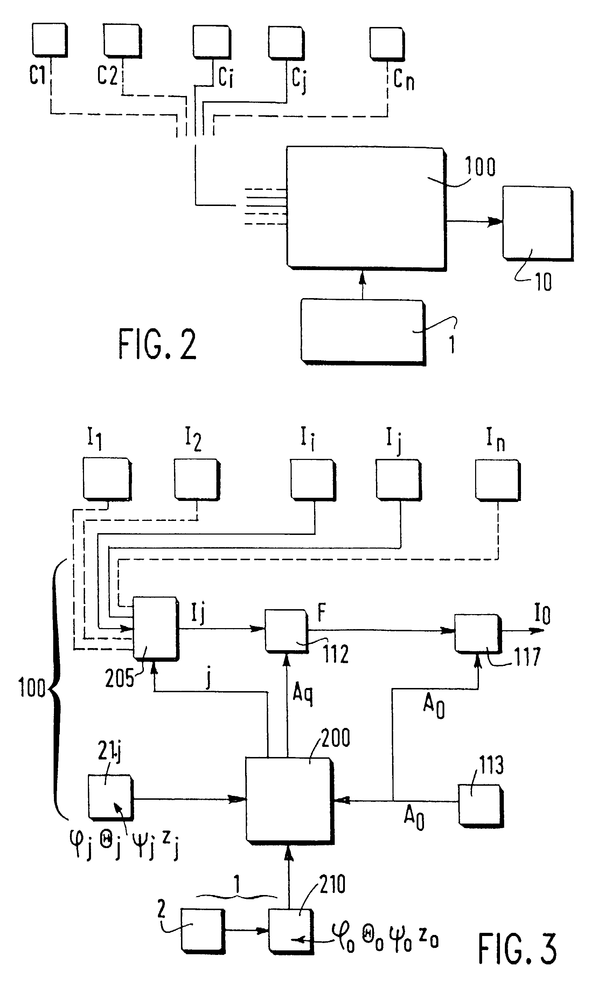

La Fig.2 montre sous forme de blocs fonctionnels les différents éléments du dispositif de traitement d'image selon l'invention.

Les blocs C1, Ci, Cj.., Cn représentent les n caméras fixes réelles dont les sorties fournissent les n images sources notées I1,... Ii, Ij.., In.

Chacune des caméras réelles a des paramètres de prise de vue correspondant à son orientation par rapport à la scène, ainsi qu'un facteur d'échelle. Ces paramètres doivent être connus de manière très précise.

Le bloc 1 représente un système de contrôle qui permet à l'utilisateur de choisir et d'afficher des paramètres relatifs à l'orientation et à un facteur d'échelle de la caméra virtuelle Co.

Le bloc 100 est un système de reconstruction d'image qui permet de calculer, à partir des images sources I1....In fournies par les caméras réelles C1... Cn, l'image dite "image cible" Io qui serait donnée par la caméra virtuelle Co orientée et réglée avec les paramètres définis par le système de contrôle 1, cette caméra virtuelle Co étant disposée de telle sorte que son point de fuite est confondu ou proche du point de fuite P des caméras réelles.

Le bloc 10 correspond à des moyens d'affichage, ou bien d'enregistrement, qui peuvent être entre autres, un moniteur d'affichage numérique pour l'affichage en temps réel et/ou un magnétoscope pour l'enregistrement sur bandes magnétiques etc...

D'autre part, il faut noter que les caméras réelles peuvent fournir des données analogiques. Dans ce cas, des modules de conversion analogique-numérique non représentés sont utilisés pour former les images sources numériques.

D'une façon avantageuse, l'homme du métier peut choisir des caméras à couplage de charges (CCD, de l'anglais Charge Coupled Device). Ce genre de caméra est peu onéreux, léger, robuste et fiable. Sa résolution est très bonne, et peut encore augmenter dans le futur en fonction de l'évolution des technologies.

## V/ <u>Le dispositif de traitement d'image dans ses éléments détaillés</u>

La Fig.3 montre un diagramme de blocs fonctionnels correspondant aux moyens essentiels pour réaliser le traitement.

Ces moyens comportent principalement :

- une interface utilisateur 2,
- un calculateur d'adresse 200, incluant un sélecteur d'image source 205 ;
- un interpolateur 112.
- un générateur d'adresse 113 qui génère les adresses Ao des pixels de l'image cible Io, pixel par pixel, de manière à couvrir la totalité de cette image cible Io,
- des premiers moyens de stockage 210 des paramètres $\phi o$, $\Theta o$, $\psi o$ et zo (le facteur d'échelle) de la caméra virtuelle Co,
- des seconds moyens de stockage 21.1 à 21.n des paramètres $\phi 1$ à $\phi n$, $\Theta 1$ à $\Theta n$, $\psi 1$ à $\psi n$ et z1 à zn (les facteurs d'échelles des caméras réelles C1 à Cn) respectivement,
- des troisièmes moyens de stockage 117.

Pour chaque pixel m' de l'image cible Io à construire, une adresse Ao est stockée dans le bloc 113 générateur des adresses dans l'image cible Io. En fonction des réglages choisis par l'utilisateur qui sont entrés dans le bloc de contrôle 1 au moyen d'une interface-utilisateur proprement dite 2, et qui sont stockés sous la forme des paramètres $\phi o$, $\Theta o$, $\psi o$ et zo de la caméra virtuelle dans le bloc 210, et en fonction des paramètres $\phi i$, $\Theta i$, $\psi i$ et zj (j représentant ici l'indice de toutes les caméras de 1 à n) des caméras réelles qui sont stockés dans les blocs 21.1, 21.j, 21.n, le calculateur d'adresse 200 fournit l'index j (parmi tous les indices 1 à n) de la caméra réelle Cj capable de fournir l'image Ij où trouver les données correspondant à l'adresse Ao du pixel m' de l'image cible Io.

Alors le sélecteur d'image 205 sélectionne cette caméra réelle Cj parmi les n caméras réelles, et fournit l'image source Ij correspondante où trouver ces données à traiter.

Le calculateur d'adresse 200, à partir des mêmes éléments, calcule l'adresse Aq du point m correspondant dans cette image source Ij sélectionnée, et ceci à travers les différentes transformations ou perspectives imposées par l'utilisateur en 2.

Par ces opérateurs, on établit donc une correspondance entre un pixel m' à une adresse donnée Ao de l'image cible Io, et un point m à une adresse calculée Aq d'une image source Ii.

Puis, la valeur de la luminance au point m à l'adresse Aq dans l'image source Ij est déterminée, afin d'être affectée au pixel correspondant m' à l'adresse Ao dans l'image cible Io. Et ainsi pour tous les pixels de l'image cible Io.

Mais, alors que l'adresse Ao dans l'image cible Io est réellement celle d'un pixel m', à la différence, l'adresse Aq dans l'image source Ii est précisément une adresse calculée, ce qui fait que, en général, cette adresse trouvée ne coïncide pas avec un pixel, mais avec un point m disposé entre des pixels. La luminance de ce point m doit donc être également calculée.

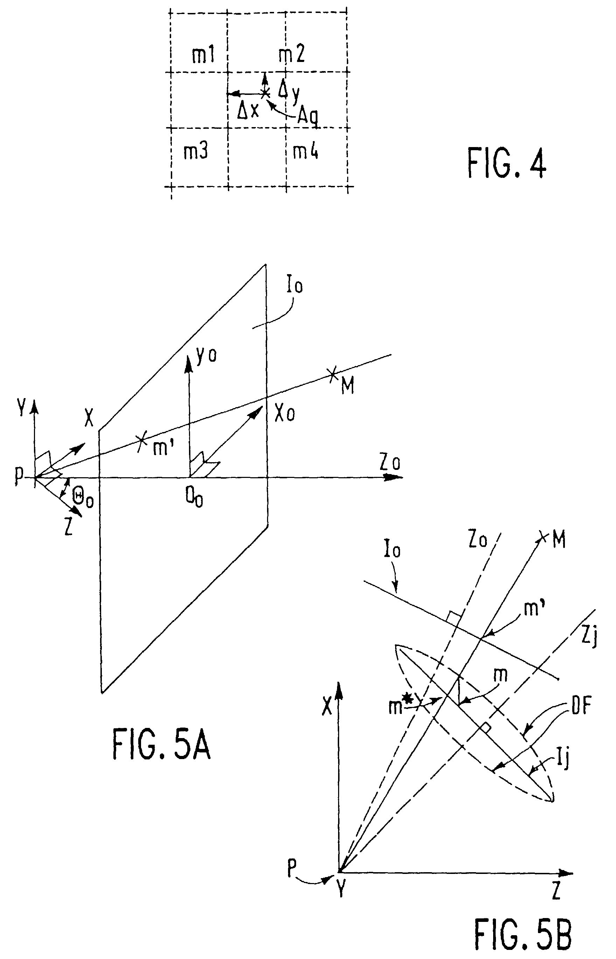

La Fig.4 illustre le problème qui se pose lorsque l'adresse Aq ne coïncide avec aucun pixel d'une image source Ii.

Ce problème est traité par l'interpolateur 112.

L'interpolateur 112 prend en compte l'intensité lumineuse, c'est-à-dire par exemple les niveaux de gris, ou une valeur d'une fonction de luminance des pixels d'un voisinage de l'adresse Aq, pour calculer l'intensité lumineuse à affecter à l'adresse Aq en question. Et par une méthode d'interpolation, le bloc 112 calcule l'intensité la plus probable à affecter à l'adresse Aq.

Il existe plusieurs fonctions possibles d'interpolation qui sont plus ou moins complexes, et qui fournissent selon leur complexité, des résultats plus ou moins finement ajustés.

Une fonction d'interpolation très simple est l'interpolation bilinéaire illustrée par la Fig.4. L'adresse Aq comporte une partie entière et une partie fractionnaire. L'adresse Aq se trouve pour cette raison située entre quatre pixels voisins m1, m2, m3, m4. La partie fractionnaire de l'adresse est représentée par Δ x compté positivement de m1 vers m2, et par Δ y compté positivement de m1 vers m3. La distance entre m1 et m3, et entre m1 et m2 est de 1 pixel.

L'intensité F ou valeur de la fonction de luminance à l'adresse Aq est calculée à partir des valeurs de Δx, Δy et des intensités (ou valeurs des fonctions de luminance) des pixels m1, m2, m3, m4 du voisinage, soit respectivement F1, F2, F3, F4

$$F(Aj)=F1(1-\Delta x)(1-\Delta y)+F2\Delta x(1-\Delta y)+F3(1-\Delta x)\Delta y+F4\Delta x.\Delta y$$

L'intensité F(Aq) calculée par l'interpolateur à l'adresse Aq dans les images sources, est ensuite attribuée comme intensité (ou valeur de fonction de luminance) au pixel m' situé à l'adresse de départ Ao dans l'image cible Io, et stockée dans le bloc 117.

### VI/ Description du calculateur d'adresse 200

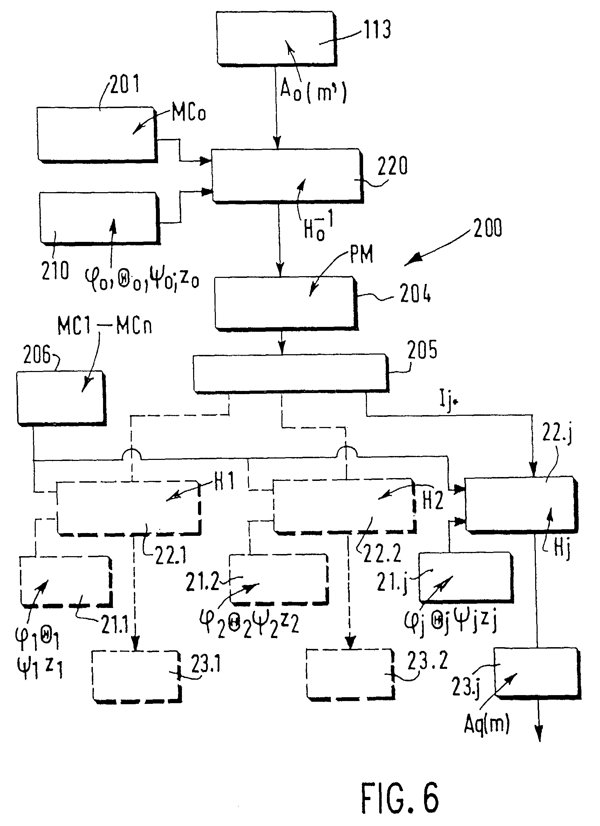

En référence avec la FIG.6, le calculateur d'adresse 200 est décrit ci-après en détail.

Le calculateur d'adresse 200 prend d'abord en compte les paramètres des caméras virtuelles et réelles telle que définis précédemment.

Le paramètres φo, Θo, ψo et zo de la caméra virtuelle sont disponibles dans le module de stockage 210 ; les paramètres φ1 à φn, Θ1 à Θn, ψ1 à ψn et z1 à zn des caméras réelles sont disponibles respectivement dans les modules de stockage 21.1 à 21.n.

On a déterminé une définition des dimensions des images en nombre de pixels qui s'exprime par largeur x hauteur (en pixels). Donc les facteurs zo ou zi d'échelle s'expriment en pixels/mm. Les angles sont exprimés par exemple en degrés.

Pour la caméra virtuelle, ces paramètres φo, Θo, ψo, zo sont calculés à partir de l'orientation ou positionnement de l'axe optique de la caméra virtuelle, du positionnement de son point de fuite P et centre d'image Oo, et du facteur d'échelle choisis par l'utilisateur, entrés sur l'interface 2.

Pour les caméras réelles, les paramètres φ1 à φn, Θ1 à Θn, ψ1 à ψn, les distances focales PO1 à POn, les facteurs d'échelle z1 à zn et le centre O1 à On de l'image numérique sont déterminés de façon très précise, à partir de calibrages et mesures très précises effectuées sur le positionnement du point P et centre O1 à On de chaque caméra, son facteur d'échelle, et l'orientation ou positionnement de son axe optique.

Le calculateur d'adresse 200 comprend ensuite des moyens 201 et 206 pour construire une modélisation de la caméra virtuelle Co, et une modélisation des caméras réelles C1, C2, C3,...Cn.

La Fig.5A illustre le principe de modélisation des caméras virtuelle Co, et réelles C1, C2... Cn. Le modèle de projection représenté sur la Fig.5A est fondé sur une projection conique à travers un point selon laquelle tous les rayons optiques passent par le seul point de fuite P (en anglais PIN-HOLE MODEL). Le point de fuite P (en anglais : VIEW POINT) est supposé confondu pour toutes les caméras, réelles ou virtuelle, sous les conditions exposées précédemment.

Le repère terrestre Px, Py, Pz, et le repère individuel de la caméra virtuelle sont définis dans le module de construction 201 ; le repère terrestre Px, Py, Pz et les repères individuels de chacune des caméras réelles C1 à Cn sont définis dans le module de construction 206.

Supposons, en référence avec la Fig.5A que M soit un point objet situé dans une scène à surveiller. Le point m' correspondant à M dans le plan image de la caméra virtuelle Co est situé à l'intersection de la droite PM avec le plan image Io (Ooxo, Ooyo) de la caméra Co.

Il faut remarquer que le modèle de la FIG.5A est directement valable pour la caméra virtuelle qui est une caméra idéale sans distorsions. Lorsque l'on a affaire à une caméra réelle, par exemple munie d'un objectif à grand angle d'ouverture, il existe dans l'image des distorsions qu'il faut corriger.

La FIG.5B illustre ce problème. Cette figure 5B montre les traces des plans image cible Io, et image source Ij représentés comme dans la FIG.1A.

Le problème à résoudre, pour construire l'image cible Io à partir des images sources I1 à In est de déterminer à quelle adresse Aq on peut trouver le point m qui correspond exactement au pixel m' d'adresse Ao. On cherche en effet à déterminer l'intensité qui existe dans l'image source en ce point m, pour pouvoir l'affecter au point m' dans l'image cible.

Cette détermination n'est pas simple du fait des défauts de distorsions et défauts de perspective qui affectent les caméras réelles.

En référence avec la FIG.5B, on a représenté comme dans la FIG.5A que le pixel m' d'adresse Ao se trouve à l'intersection du rayon lumineux PM avec l'image cible Io, PM étant le rayon qui joint le point de fuite P à un point M de la scène à observer puisque, dans cette caméra idéale, tout rayon passant par le point de fuite P traverse le plan image sans déviation.

Par ailleurs, ce rayon PM coupe le plan image source Ij en un point m*. La caméra Cj sera donc la caméra réelle sélectionnée pour fournir les données nécessaires à la construction de cette partie de l'image cible.

Mais par contre, il n'est pas vrai que le point m* situé à l'intersection entre le même rayon PM et le plan image source Ij soit le point correspondant de m' dans Ij capable de fournir la valeur d'intensité F à affecter à ce point m'.

Il faut prendre en compte que la caméra Cj, comme toute caméra, comprend un objectif optique, qui forme une image réelle sur un substrat muni d'une matrice de CCD ; cette image réelle est ensuite transformée par un module de conversion analogique-numérique pour fournir l'image source numérique Ij qui est alors traitée par le dispositif de traitement d'image numérique selon l'invention. Du fait de la nécessité d'utiliser un objectif à lentille, on peut considérer, comme il est montré schématiquement sur la FIG.5B, que le rayon lumineux MP est dévié par le champ de distorsion DF représenté en traits pointillés, ce qui fait que le point correspondant à m' n'est pas le point m* situé sur MP, mais bien un point m situé à une petite distance de m* dans le plan image source Ij.

Avec les données relatives aux repères terrestre et individuel, le module de construction 201 bâtit un modèle MCo de caméra virtuelle sur le modèle de projection conique représenté sur la FIG.5A, dans lequel tout rayon PM dans l'espace à 3 dimensions correspond à un pixel m' dans l'espace à 2 dimensions constitué par le plan image cible Io, puisque la caméra virtuelle Co est considérée comme un caméra idéale.

D'autre part, avec les données relatives au repère terrestre et aux repères individuels, le module de construction 206 bâtit les modèles MC1 à MCn relatifs à chacune des caméras réelles, sur le modèle de projection conique représenté sur la FIG.5A, dans lequel tout rayon PM dans l'espace à 3 dimensions correspond à un point m* dans l'espace à 2 dimensions constitué par le plan image source de chacune des caméras. Et, comme ces caméras ne sont pas des caméras idéales, mais présentent au contraire des distorsions, ce module 206 de construction des modèles MC1 à MCn contient des moyens de corrections de distorsions qui permettent de remplacer systématiquement le point m* trouvé, qui correspond à une image source distordue, par un point m dans le même espace à deux dimensions, qui correspond à une image source corrigée. Les moyens de correction des distorsions des objectifs peuvent être tous moyens connus de l'homme du métier.

Le calculateur d'adresse 200 comprend en outre des moyens de calcul d'adresse proprement dits pour déterminer l'adresse Aq de ce point m de l'image source distordue Ij.

Ces moyens sont représentés sous forme de blocs fonctionnels sur la FIG.6, et mettent en oeuvre une méthode du calcul de l'adresse Aq, décrite ci-après, et illustrée par la FIG.5B pour la clarté de l'exposé.

## VI a) La méthode de calcul d'adresse

Cette méthode de calcul de l'adresse Aq correspondant à une adresse de départ Ao, comporte plusieurs étapes qui incluent au moins une transformation géométrique complexe qui est le produit de plusieurs transformations élémentaires. Cette transformation géométrique est fondée sur le fait qu'il existe maintenant, grâce au module 206 décrit précédemment, une correspondance entre chaque pixel m d'une image source d'une caméra réelle et un rayon lumineux PM, dans l'espace à trois dimensions, passant par le point de fuite P défini dans le modèle de la caméra. La localisation d'un pixel m dans l'image dépend des paramètres de la caméra relatifs à la définition du modèle de cette caméra, alors que le rayon lumineux correspondant PM a une localisation dans l'espace à trois dimensions qui peut être exprimée par rapport au "repère terrestre" fixe.

La méthode de calcul de l'adresse Aq à partir de Ao inclut les étapes suivantes :

- une première transformation dite "transformation-perspective inverse" notée $H_o^{-1}$ , qui donne la direction du rayon lumineux PM correspondant à l'adresse de départ Ao dans l'image cible Io,
- la recherche de l'index j la caméra réelle Cj dont le champ de visée contient le rayon lumineux en question, et si plusieurs caméras sont concernées, du fait d'un recouvrement possible des champs de visée, le choix d'une caméra appropriée,
- une seconde transformation dite "transformation-perspective directe" notée Hj, qui donne l'adresse Aq dans l'image Ij de la caméra réelle Cj sélectionnée, correspondant au rayon lumineux PM.

Les deux transformations, inverse $H^{-1}$ et directe H, s'appuient comme on l'a dit, sur la définition des modèles des caméras ayant un point de fuite P commun (en anglais : VIEW POINT OF THE PIN-HOLE MODEL).

Pour réaliser la transformation géométrique complexe H, on est amené à considérer en premier une opération appelée "projection-perspective" J qui permet de passer du point M d'une scène, repéré dans le repère terrestre (Px, Py, Pz), au point m positionné dans le plan image d'une caméra réelle Ci, le point m étant alors repéré dans le système orthonormé individuel lié à cette caméra réelle, c'est-à-dire (Ojxj, Ojyj, Ojzj).

L'opération "projection-perspective" J fait passer, par une méthode mathématique, le repérage d'un point d'un système à 3 dimensions, dans un système à 2 dimensions. Cette opération peut être linéarisée par l'utilisation des coordonnées homogènes qui permet d'exprimer la transformation par une matrice 4 x 4.

La transformation géométrique H dite "transformation-perspective" est le produit de plusieurs matrices en coordonnées homogènes :

T qui est une matrice représentant une translation,

S qui est une matrice représentent un changement d'échelle,

J qui est la matrice "projection-perspective" dont on a parlé plus haut,

L qui est un changement d'origine,

R qui est une rotation selon les angles $\varphi j$, $\Theta j$, $\psi j$,

ou $\varphi o$, $\Theta o$, $\psi o$ selon le cas.

La transformation géométrique directe s'exprime alors par : $H = T * S * J * L * R$, et la transformation géométrique inverse par :

$$H^{-1} = T^{-1} * S^{-1} * J^{-1} * L^{-1} * R^{-1}$$

Cette transformation peut être exprimée de manière approchée par un ensemble de fonctions polynomiales en utilisant par exemple la méthode des moindres carrés.

La transformation approchée ainsi obtenue peut alors être réalisée au moyen d'un produit du commerce référencé chez la firme TRW par TMC2302. L'adresse de cette firme est : PO Box 2472, LA JOLLA, CA92038 (US).

### VI.b/ Description d'une mise en oeuvre particulière du calculateur d'adresse 200

Cette mise en oeuvre est illustrée au moyen de blocs fonctionnels sur la FIG.6, dans laquelle sont représentés:

- le bloc 201 qui est le premier module de construction du modèle de la caméra virtuelle MCo,
- le bloc 210 qui est le premier module de stockage des paramètres $\varphi o$, $\Theta o$, $\psi o$, zo de la caméra virtuelle imposés par l'utilisateur à l'interface 2 du bloc de contrôle 1,
- le bloc 113 qui est le générateur des adresses Ao de tous les pixels m' de l'image cible Io,
- le bloc 220 qui est un premier module de calcul de transformation géométrique qui reçoit les informations suivantes :

    * l'adresse Ao de m', provenant du générateur d'adresse 113,
    * le modèle MCo de la caméra virtuelle provenant du module de construction 201,
    * les paramètres $\varphi o$, $\Theta o$, $\psi o$, zo de la caméra virtuelle provenant du premier module de stockage 210

Le bloc de calcul 220 détermine, dans l'espace à 3 dimensions, la position du rayon PM passant par le point de fuite P et par le pixel m', à partir de la localisation de m' dans l'espace Io à deux dimensions. Ce bloc de calcul 220 applique, à cet effet, la transformation perpective inverse : $H_o^{-1}$ décrite précédemment,

- le bloc 204 qui est un module de stockage de la position du rayon lumineux PM dans l'espace à 3 dimensions, position qui est fournie par le bloc de calcul 220,
- le bloc de sélection 205 qui est un module d'aiguillage, et qui, à partir du rayon PM localisé, sélectionne la caméra réelle Cj, et fournit l'image source correspondante lj dans laquelle trouver le point m recherché,
- le bloc 206 qui est le second module de construction des modèles MC1 à MCn des caméras réelles, avec des moyens incorporés de corrections des distorsions,
- les blocs 21.1 à 21.n qui sont les blocs de stockages, dits seconds moyens de stockage, des paramètres $\varphi 1$ à $\varphi n$,

$\Theta 1$ à $\Theta n$, $\psi 1$ à $\psi n$, z1 à zn respectivement des caméras réelles,

- les blocs 22.1 à 22n qui sont desdits seconds modules de calcul de transformation géométrique, et qui reçoivent respectivement les informations suivantes,

  * le signal de sélection provenant du module d'aiguillage 205, avec les informations relatives à l'image source Ij dans le cas décrit ici à titre d'exemple puisque la caméra Cj a été sélectionnée,
  * le modèle MCj de la caméra réelle Cj, provenant du second module de construction 206,
  * les paramètres $\varphi j$, $\Theta j$, $\psi j$, zj de la caméra réelle Cj provenant du module de stockage 21.j (seconds moyens de stockage), dans le cas décrit ici. Dans le cas présent, le module de calcul 22.j (seconds moyens de calcul de transformation géométrique) calcule, dans l'espace à 2 dimensions constitué par le plan image source Ij, la localisation du point m, à partir de la localisation fournie par le module de stockage 204 du rayon lumineux PM, et ceci au moyen de la transformation perspective directe : Hj décrite précédemment (si le module d'aiguillage 205 avait sélectionné une autre image source, alors un autre module de calcul 22.1 à 22.n aurait appliqué la transformation perspective directe appropriée H1 à Hn pour localiser le point m dans cette autre image source),

- les blocs 23.1 à 23.n qui sont enfin des blocs de stockage des adresses Aq de chaque point m. Dans le cas présent l'adresse Aq du point m recherché sera disponible dans le module de stockage 23. j.

A la suite de ces opérations effectuées dans le calculateur d'adresse 200, en référence avec la Fig.3, ce calculateur d'adresse 200 fournit alors au bloc interpolateur 112 l'adresse Aq, et ce dernier calcule la fonction de luminance F correspondante. L'image Io peut alors être reconstituée dans le bloc de stockage 117 en faisant correspondre à chaque pixel m d'adresse Ao une valeur de la fonction F de luminance. L'image cible est maintenant reconstruite.

En référence avec la Fig.2, l'image Io peut ensuite être affichée, ou stockée dans les moyens 10.

Si on se trouve dans le cas où plusieurs images sources sont possibles, par exemple parce qu'on a recouvrement des images sources dans une région frontière, le bloc de sélection 205 contient des moyens pour choisir une seule des deux images-sources.

Une méthode de sélection entre deux images consiste à décider que le raccord entre deux images dans la région frontière est constitué par une ligne droite qui passe sensiblement au milieu de la zone de recouvrement. Cette convention est applicable au cas des caméras juxtaposées horizontalement comme sur la Fig.1 avec des raccords verticaux.

L'homme du métier peut choisir toutes sortes de raccords. Par exemple des raccords disposés radialement sur des coniques.

En remarque, on peut noter que ce qui a été dit pour le codage des pixels en niveau de gris peut s'appliquer au codage d'une image couleur. Le codage s'effectue simplement sur un plus grand nombre de bits.

On notera que, pour qu'aucun raccord ne soit sensible dans l'image cible, il est nécessaire de prendre plusieurs mesures :

- la calibration précise des caméras fixes,
- la correction des résultats par des rebouclages, suivie d'une modification éventuelle des paramètres des modèles des caméras fixes jusqu'à ce qu'on obtienne une juxtaposition parfaite conduisant à une image cible sans défaut.

Cette opération, ou initialisation, doit être comprise comme une partie intégrante de l'opération de calibrage.

On rappelle en outre, que des corrections de distorsion sont à appliquer à chaque image source pour la construction des modèles MC1 à MCn. Il existe dans le commerce des dispositifs capables de réaliser ces opérations. La vérification de l'opération parfaite des correcteurs de distorsion utilisés est aussi partie intégrante du calibrage.

Par ailleurs, les différentes caméras réelles peuvent montrer des courbes de réponse en intensité de niveau de gris ou couleur qui diffèrent. Il est nécessaire lors du calibrage d'effectuer une correction de ces réponses individuelles pour uniformiser l'image virtuelle.

L'interface utilisateur 2 peut être commandée automatiquement, ou bien manuellement. Dans un exemple de mise en oeuvre cette interface peut être un levier orientable (en anglais JOY-STICK).

**Revendications**

1. Procédé de traitement d'images, pour construire une image dite cible (Io), à partir d'images adjacentes, de cadrage fixe, appelées images sources (I1,..., Ii, Ij...., In), lesdites images sources ayant des points de fuite substantiellement confondus, caractérisé en ce qu'il comprend des étapes de :

a) numérisation des images,

b) détermination d'un point de fuite (P) commun aux dites images cible et sources et d'un repère orthonormé fixe (Px,Py,Pz) ayant pour origine ledit point de fuite commun (P),

c) génération, pixel par pixel, d'une adresse (Ao) pour chacun des pixels de l'image cible (Io) de manière à couvrir la totalité de l'image cible (Io),

d) détermination, sur la base d'une adresse (Ao) d'un pixel de départ (m') dans l'image cible (Io), d'une orientation, dans ledit repère orthonormé fixe (Px, Py, Pz), d'un rayon lumineux rectiligne (PM) passant par ce pixel de départ (m') et par ledit point de fuite commun (P),

e) sélection d'une image source (Ij) traversée par ce rayon lumineux rectiligne (PM),

f) détermination, sur la base de l'orientation du dit rayon lumineux rectiligne (PM), d'une adresse (Aq) d'un point corrigé en distorsion (m) dans ladite image source sélectionnée (Ij) qui correspond au pixel de départ (m'),

g) détermination d'une valeur (F) de luminance en ce point (m) corrigé en distorsion dans l'image source sélectionnée (Ij),

h) attribution de ladite valeur de luminance (F) du point corrigé en distorsion (m) au pixel de départ (m') dans l'image cible (Io),

i) et répétition des étapes d) à h) pour chacun des pixels de l'image cible (Io).

2. Procédé selon la revendication 1, caractérisé en ce qu'il comprend des étapes de calibrage incluant :

le stockage de paramètres des images sources, incluant des facteurs d'échelle (z1... zn) et des angles d'orientation constitués par les angles d'azimut ($\Theta$1... $\Theta$n), les angles de site ($\varphi$1... $\varphi$n) et les angles de rotation ($\psi$1... $\psi$n) des axes optiques des images sources, lesdits angles étant définis dans ledit repère orthonormé fixe (Px, Py, Pz),

la construction de modèles de caméras appelées réelles pour fournir lesdites images sources avec ledit point de fuite qui est substantiellement commun confondu avec l'origine du dit repère orthonormé fixe, et pour corriger des aberrations dans lesdites images sources,

le stockage de paramètres de l'image cible incluant un facteur d'échelle (zo) et des angles d'orientation constitués par un angle d'azimut ($\Theta$o), de site ($\varphi$o) et de rotation ($\psi$o) de l'axe optique de l'image cible, lesdits angles étant définis dans ledit repère orthonormé fixe (Px, Py, Pz),

et la construction d'un modèle de caméra appelée virtuelle pour fournir ladite image cible avec ledit point de fuite qui est substanciellement commun avec celui des images sources.

3. Procédé selon la revendication 2, caractérisé en ce que :

l'étape de détermination de la position du rayon lumineux rectiligne (PM) dans ledit repère orthonormé comprend une transformation géométrique de perspective appelée transformation-perspective inverse ($Ho^{-1}$) qui prend en compte le modèle de la caméra virtuelle,

l'étape de détermination de l'adresse (Aq) du dit point (m) corrigé en distorsion correspondant au dit pixel de départ (m') comprend des transformations géométriques de perspective (H1-Hn) appelées transformations-perspective directes qui, selon ladite image source sélectionnée (Ij), prennent en compte le modèle de la caméra réelle respective correspondante.

4. Procédé selon l'une des revendications 1 à 3, caractérisé en ce que :

l'étape de détermination d'une valeur de luminance (F) au dit point (m) corrigé en distorsion dans ladite image source sélectionnée (Ij) inclut un calcul d'interpolation pour déterminer une valeur la plus probable d'une fonction de luminance à l'adresse (Aq) dans l'image source sélectionnée (Ij).

5. Dispositif de traitement d'images comprenant :

un système de n caméras réelles fixes (C1,... Ci, Cj, ... Cn), disposées de manière à ce que leurs champs de vue individuels fusionnent pour former un seul champ de vue de grand angle pour l'observation d'une scène panoramique, lesdites caméras réelles fournissant des images adjacentes appelées images sources,

un système de construction d'image simulant une caméra appelée virtuelle (Co), mobile, balayant continuement la scène panoramique pour en fournir une sous-image appelée cible (Io), correspondant à une section sélectionnée du champ de vue de grand angle, et construite à partir des dites images sources (I1,...Ii, Ij... In) fournies par les n caméras réelles,

caractérisé en ce que ce dispositif de traitement d'image comprend :

des moyens de numérisation des dites images cible et sources,
des moyens de calibration pour déterminer un point de fuite (P) substantiellement commun à ces images, et un repère orthonormé fixe (Px,Py,Pz) ayant pour origine ledit point de fuite commun,
un générateur d'adresses, pour générer, pixel par pixel, des adresses respectives pour les pixels de ladite image cible (Io) de manière à couvrir la totalité de l'image cible (Io),
un calculateur d'adresses pour calculer, sur la base d'une adresse (Ao) d'un pixel courant appelé pixel de départ (m') dans l'image cible (Io), une orientation, dans ledit repère orthonormé fixe, d'un rayon lumineux rectiligne (PM) passant par ledit pixel de départ (m') et par ledit point de fuite commun (P), pour sélectionner une image source (Ij) traversée par ledit rayon lumineux rectiligne (PM), et pour calculer sur la base de l'orientaton du dit rayon lumineux rectiligne (PM), une adresse (Aq) d'un point corrigé en distorsion (m), dans ladite image source sélectionnée (Ij), ledit point corrigé en distorsion (m) correspondant au dit pixel de départ (m'), et des moyens (112, 117) pour déterminer une valeur (F) de luminance à l'adresse (Aq) trouvée dans l'image source (I1-In) au dit point corrigé en distorsion, et pour affecter cette valeur (F) de luminance au pixel de départ (m') à l'adresse (Ao) dans l'image cible (Io).

6. Dispositif selon la revendication 5, caractérisé en ce que les moyens de callibration comprennent aussi :

des premiers moyens de stockage (210) pour stocker des paramètres relatifs à ladite caméra virtuelle pour fournir au calculateur d'adresse un facteur d'échelle (zo) et des angles d'orientation de l'axe optique de ladite caméra virtuelle (Co) dans ledit repère orthonormé (Px, Py, Pz) fixe qui est indépendant des caméras, c'est-à-dire des angles d'orientation constituées par un angle d'azimut ($\Theta o$), un angle de site ($\varphi o$) et un angle de rotation ($\psi o$),
des seconds moyens de stockage (21.1-21.n) pour stocker des paramètres relatifs aux dites caméras réelles (C1-Cn) pour fournir au dit calculateur d'adresse un facteur d'échelle (zl-zn) et des angles d'orientation de l'axe optique de chacune des caméras réelles (C1,..Ci, Cj, Cn) c'est-à-dire des angles d'orientation constitués par des angles d'azimut ($\Theta 1 - \Theta n$), les angles de site ($\varphi 1 - \varphi n$) et les angles de rotation ($\psi 1 - \psi n$) définis dans ledit repère orthonormé fixe,
un générateur d'adresse (113) pour générer, pixel par pixel, les adresses (Ao) des pixels de l'image cible (Io), pixel par pixel, de manière à couvrir la totalité de l'image cible (Io), le calculateur d'adresse (200) déterminant alors l'image source sélectionnée (Ij) et le point à l'adresse (Aq) dans cette image source sélectionnée, qui correspond à chaque pixel de l'image cible (Io), sur la base des paramètres des caméras virtuelle et réelles.

7. Dispositif selon la revendication 6, caractérisé en ce que le calculateur d'adresse comprend :

des premiers moyens de construction d'un modèle (MCo) de caméra virtuelle avec projection à travers ledit point de fuite (P),
et des seconds moyens de construction de modèles (MC1-MCn) de caméras réelles, avec projection à travers ledit point de fuite (P), et avec corrections des distorsions.

8. Dispositif selon la revendication 7, caractérisé en ce que le calculateur d'adresse comprend :

des premiers moyens de calcul pour calculer une transformation géométrique appelée transformation-perspective inverse ($H_o^{-1}$) pour appliquer au pixel de départ (m') à une adresse (Ao) de l'image (Io) de la caméra virtuelle (Co), transformation-perspective inverse ($H_o^{-1}$) qui prend en compte le modèle de la caméra virtuelle (MCo) fourni par lesdits premiers moyens de construction et les paramètres constitués par l'angle d'azimut ($\Theta o$), l'angle de site ($\varphi o$), l'angle de rotation ($\psi o$) et le facteur d'échelle (zo) de cette caméra virtuelle, fournis par lesdits premiers moyens de stockage, pour déterminer, sur la base de ladite transformation-perspective inverse ($H_o^{-1}$), la position dans ledit repère orthonormé fixe, du dit rayon lumineux rectiligne passant par ce pixel de départ (m') et par ledit point de fuite (P),
des moyens pour stocker la position du dit rayon lumineux rectiligne obtenue par la transformation-perspective inverse ($H_o^{-1}$),
des moyens de sélection pour sélectionner une image source (I1-In) traversée par ce rayon lumineux rectiligne,
des seconds moyens de calcul pour calculer une transformation géométrique appelée transformation-perspective directe (H1-Hn), pour appliquer à ce rayon lumineux rectiligne, transformation-perspective directe qui prend en compte les modèles des caméras réelles fournis par les seconds moyens de construction, constitués par les angles d'azimut ($\Theta 1$-$\Theta n$), les angles de site ($\varphi 1$-$\varphi n$), les angles de rotation ($\psi 1$-$\psi n$), et les facteurs d'échelle (zl-zn) de la caméra (C1-Cn) réelle correspondant à l'image source sélectionnée, fournis par lesdits seconds moyens de stockage,

et des moyens de stockage pour fournir, sur la base de ladite transformation-perspective directe (H1-Hn), une adresse (Aq) dans l'image source sélectionnée (I1-In) qui correspond au rayon lumineux rectiligne, et donc au pixel de départ d'adresse (Ao) dans l'image cible (Io).

9. Dispositif selon la revendication 8, caractérisé en ce que les moyens de détermination de luminance comprennent :

un interpolateur pour calculer une valeur la plus probable d'une fonction de luminance (F) à l'adresse (Aq) trouvée par le calculateur d'adresse dans l'image source sélectionnée fournie les moyens de sélection, des troisièmes moyens de stockage pour affecter la valeur calculée (F) de luminance correspondant à l'adresse (Aq) trouvée dans l'image source sélectionnée, au pixel de départ dans l'image cible (Io) à l'adresse (Ao) fournie par ledit générateur d'adresse.

10. Dispositif selon l'une des revendications 5 à 9, caractérisé en ce que le système de construction de l'image cible (Io) comprend aussi :

une interface (2) pour permettre à un utilisateur de définir lesdits paramètres de la caméra virtuelle (Co), ces paramètres incluant le facteur d'échelle (zo) et l'orientation de l'axe optique ($\Theta o$, $\varphi o$, $\psi o$).

11. Dispositif selon la revendication 10, caractérisé en ce que l'interface utilisateur (2) est commandée automatiquement ou manuellement.

12. Dispositif selon l'une des revendications 5 à 11, caractérisé en ce qu'il comprend en outre un système d'affichage avec un écran pour afficher l'image cible (Io) en temps réel sur ledit écran (10).

13. Dispositif selon l'une des revendications 5 à 12, caractérisé en ce qu'il comprend en outre un système d'enregistrement pour enregistrer l'image cible (Io).

14. Dispositif de surveillance muni d'un dispositif de traitement d'image selon l'une des revendications 5 à 13.

**Patentansprüche**

1. Bildverarbeitungsverfahren zum Aufbauen eines Targetbildes (Io), ausgehend von benachbarten Bildern mit festem Rahmen, die mit Quellenbildern (I1,..., Ii, Ij....,In) bezeichnet werden, wobei die Quellenbilder im Wesentlichen zusammenfallende Fluchtpunkte aufweisen, <u>dadurch gekennzeichnet</u>, daß das Verfahren folgende Schritte umfaßt:

a) Digitalisierung der Bilder,
b) Bestimmung eines für die Targetbilder und Quellenbilder gemeinsamen Fluchtpunktes (P) mit einem festen orthogenormten Ortungspunkt (Px, Py, Pz) mit dem gemeinsamen Fluchtpunkt (P) als Ursprung,
c) pixelweise Erzeugung einer Adresse (Ao) für jedes der Pixel des Targetbildes (Io) zum Abdecken der Gesamtheit des Targetbildes (Io),
d) Bestimmung eines Ausgangspixels (m') im Targetbild (Io) auf der Basis einer Adresse (Ao) mit einer Orientierung im orthogenormten festen Ortungspunkt (Px, Py, Pz), mit einem geradlinigen Leuchtdichtestrahl (PM) durch das Ausgangspixel (m') und durch den gemeinsamen Fluchtpunkt (P),
e) Wählen eines Quellenbildes (Ij), das vom geradlinigen Leuchtdichtestrahl (PM) durchquert wird,
f) Bestimmung einer Adresse (Aq) mit einem verzerrungskorrigierten Punkt (m) im ausgewählten Quellenbild (Ij) auf der Basis der Orientierung dieses geradlinigen Leuchtdichtestrahls (PM), wobei das ausgewählte Quellenbild dem Ausgangspixel (m') entspricht,
g) Bestimmung eines Leuchtdichtewertes (F) in diesem verzerrungskorrigierten Punkt (m) im ausgewählten Quellenbild (Ij),
h) Zuordnen des Leuchtdichtewertes (F) des verzerrungskorrigierten Punktes (m) zum Ausgangspixel (m') im Targetbild (Io),
i) und Wiederholung der Schritte d) bis h) für jedes der Pixer des Targetbildes (Io).

**2.** Verfahren nach Anspruch 1, <u>dadurch gekennzeichnet</u>, daß es folgende Kalibrierschritte umfaßt:

- die Speicherung von Parametern der Quellenbilder mit den Skalenfaktoren ($z_1$... $z_n$) und mit den Orientierungswinkeln, bestehend aus den Azimuthwinkeln ($\theta_1$...$\theta_n$), den Kippwinkeln ($\varphi_1$...$\varphi_n$) und den Drehwinkeln ($\Psi_1$...$\Psi_n$) der optischen Achsen der Quellenbilder, wobei diese Winkel in dem festen orthonormierten Ortungspunkt ($P_x$, $P_y$, $P_z$) definiert werden,
- den Aufbau von Modellen der mit reell bezeichneten Kameras zum Erzeugen der Quellenbilder mit dem Fluchtpunkt, der im wesentlichen mit dem Ursprung des festen orthonormierten Ortungspunktes gemeinsam zusammenfällt und zum Korrigieren von Aberrationen in den Quellenbildern,
- die Speicherung von Parametern des Targetbildes mit einem Skalenfaktor ($z_o$) und mit Orientierungswinkeln, bestehend aus einem Azimuthwinkel ($\theta_o$), Kippwinkel ($\varphi_o$) und Drehwinkel ($\Psi_o$) der optischen Achse des Targetbildes, wobei diese Winkel im festen orthonormierten Ortungspunkt ($P_x$, $P_y$, $P_z$) definiert werden, und
- den Aufbau eines Modells der mit virtuell bezeichneten Kamera zum Erzeugen des Targetbildes mit dem Fluchtpunkt, der im Wesentlichen denen der Quellenbilder gemeinsam ist.

**3.** Verfahren nach Anspruch 2, <u>dadurch gekennzeichnet</u>, daß der Bestimmungsschritt für die Position des geradlinigen Leuchtdichtestrahls (PM) im orthonormierten Ortungspunkt eine geometrische Perspektivtransformation mit der Bezeichnung Umkehrperspektivtransformation ($H_o^{-1}$) umfaßt, die das Modell der virtuellen Kamera berücksichtigt,

der Bestimmungsschritt der Adresse ($A_q$) dieses verzerrungskorrigierten Punktes ($m$) entsprechend dem Ausgangspixel ($m'$) geometrische Perspektivtransformationen ($H_1$-$H_n$) mit der Bezeichnung Direktperspektivtransformationen umfaßt, die entsprechend dem ausgewählten Quellenbild ($I_j$) das Modell der entsprechenden jeweiligen reellen Kamera berücksichtigt.

**4.** Verfahren nach einem der Ansprüche 1 bis 3, <u>dadurch gekennzeichnet</u>, daß der Bestimmungsschritt eines Leuchtdichtewertes (F) am verzerrungskorrigierten Punkt ($m$) im ausgewählten Quellenbild ($I_j$) eine Interpolationsberechnung zum Bestimmen eines höchstwahrscheinlichen Wertes einer Leuchtdichtefunktion der Adresse ($A_q$) im ausgewählten Quellenbild ($I_j$) umfaßt.

**5.** Bildverarbeitungsanordnung mit folgenden Elementen:

einem System von n festen reellen Kameras ($C_1$,...$C_i$, $C_j$, ...$C_n$), die derart angeordnet sind, daß ihre individuellen Gesichtsfelder zur Erzeugung eines einzigen Großwinkel-Gesichtsfeldes zum Beobachten einer Panoramaszene ineinander übergehen, wobei die reellen Kameras benachbarte Bilder mit der Bezeichnung Quellenbilder erzeugen,
einem Bildaufbausystem zum Simulieren einer mobilen mit virtuell bezeichneten Kamera ($C_o$), die ununterbrochen die Panoramaszene abtastet, um ein mit Targetbild bezeichnetes Unterbild ($I_o$) zu erzeugen, entsprechend einem ausgewählten Abschnitt des Großwinkel-Gesichtsfeldes, und zusammengesetzt aus den Quellenbildern ($I_1$...$I_i$, $I_j$...$I_n$) aus den n reellen Kameras, <u>dadurch gekennzeichnet</u>, daß diese Bildverarbeitungsanordnung folgende Elemente enthält:
Digitalisiermittel für die Target- und Quellenbilder,
Kalibriermittel zum Bestimmen eines Fluchtpunktes (P) im Wesentlichen allen diesen Bildern gemeinsam, und einen festen orthonormierten Ortungspunkt ($P_x$, $P_y$, $P_z$) mit dem gemeinsamen Fluchtpunkt als Ursprung,
einen Adreßgenerator zum pixelweisen Erzeugen jeweiliger Adressen für die Pixel des Targetbildes ($I_o$) zum Abdecken des gesamten Targetbildes ($I_o$),
einen Adreßrechner zum Berechnen einer Orientierung eines durch das Ausgangspixel ($m'$) und durch den gemeinsamen Fluchtpunkt (P) gehenden geradlinigen Leuchtdichtestrahls auf der Basis einer Adresse ($A_o$) eines laufenden Bildes mit der Bezeichnung Ausgangspixel ($m'$) im Targetbild($I_o$) zum Wählen eines vom geradlinigen Leuchtdichtestrahl (PM) durchsetzten Quellenbild ($I_j$) und zum Berechnen einer Adresse ($A_q$) eines verzerrungskorrigierten Punktes ($m$) im ausgewählten Quellenbild ($I_j$) auf der Basis der Orientierung des geradlinigen Leuchtdichtestrahls (PM), wobei der verzerrungskorrigierte Punkt ($m$) dem Ausgangspixel ($m'$) entspricht,
und Mittel (112, 117) zum Bestimmen eines Leuchtdichtewertes (F) der Adresse ($A_q$) aus dem Quellenbild ($I_1$-$I_n$) am verzerrungskorrigierten Punkt, und zum Zuordnen dieses Leuchtdichtewertes (F) im Ausgangspixel ($m'$) zur Adresse ($A_o$) im Targetbild ($I_o$).

**6.** Anordnung nach Anspruch 5, <u>dadurch gekennzeichnet</u>, daß die Kalibriermittel ebenfalls folgende Elemente enthalten:

erste Speichermittel (210) zum Speichern von Parametern bezüglich der virtuellen Kamera zum Erzeugen eines Skalenfaktors (zo) und von Orientierungswinkeln der optischen Achse der virtuellen Kamera (Co) im festen orthonormierten Ortungspunkt (Px, Py, Pz) im Adreßrechner, wobei der Ortungspunkt von den Kameras unabhängig ist, d.h. unabhängig von den Orientierungswinkeln, bestehend aus einem Azimuthwinkel ($\theta$o), einem Kippwinkel ($\varphi$o) und einem Drehwinkel ($\Psi$o),

zweite Speichermittel (21.1-21.n) zum Speichern der Parameter bezüglich der reellen Kameras (C1-Cn) zum Erzeugen eines Skalenfaktors (zl-zn) und von Orientierungswinkeln der optischen Achse jeder der reellen Kameras (C1,...Ci, Cj, Cn) im Adreßrechner, d.h. von Orientierungswinkeln, bestehend aus Azimuthwinkeln ($\theta$1-$\theta$n), Kippwinkeln ($\varphi$1-$\varphi$n) und Drehwinkeln ($\Psi$1 - $\Psi$n), die im orthonormierten Ortungspunkt definiert sind, einen Adreßgenerator (113) zum bildweisen Erzeugen der Adressen (Ao) der Pixel des Targetbildes (Io) zum Abdecken des gesamten Targetbildes (Io), wobei der Adreßrechner (200) also das ausgewählte Quellenbild (Ij) und den Punkt in der Adresse (Aq) in diesem ausgewählten Quellenbild bestimmt, das jedem Pixel des Targetbildes (Io) entspricht, auf der Basis der Parameter der virtuellen und reellen Kameras.

7. Anordnung nach Anspruch 6, <u>dadurch gekennzeichnet</u>, daß der Adreßrechner folgende Elemente enthält:

erste Aufbaumittel eines Modells (MCo) der virtuellen Kamera mit der Projektion quer durch den Fluchtpunkt (P), und zweite Aufbaumittel der Modelle (MC1-MCn) der reellen Kameras mit der Projektion durch diesen Fluchtpunkt (P) und mit Verzerrungskorrekturen.

8. Anordnung nach Anspruch 7, <u>dadurch gekennzeichnet</u>, daß der Adreßrechner folgende Elemente enthält:

erste Berechnungsmittel zum Berechnen einer geometrischen Transformation mit der Bezeichnung Umkehrperspektivtransformation ($H_o^{-1}$) zum Zuordnen einer Adresse (Ao) des Bildes (Io) der virtuellen Kamera (Co) zum Ausgangspixel (m'), wobei die Umkehrperspektivtransformation ($H_o^{-1}$) das Modell der virtuellen Kamera (MCo) aus den ersten Aufbaumitteln und den Parametern berücksichtigt, bestehend aus dem Azimuthwinkel ($\theta$o), dem Kippwinkel ($\varphi$o), dem Drehwinkel ($\Psi$o) und dem Skalenfaktor (zo) der virtuellen Kamera aus den ersten Speichermitteln, um auf der Basis der Umkehrperspektivtransformation ($H_o^{-1}$) die Position im festen orthonormierten Ortungspunkt des geradlinigen Leuchtdichtestrahls durch das Ausgangspixel (m') und durch den Fluchtpunkt (P) zu bestimmen,

Mittel zum Speichern der Position des geradlinigen Leuchtdichtestrahls der durch die Umkehrperspektivtransformation ($H_o^{-1}$) erhalten ist,

Wählmittel zum Wählen eines Quellenbildes (I1-In), das von diesem geradlinigen Leuchtdichtestrahl durchsetzt wird,

zweite Berechnungsmittel zum Berechnen einer geometrischen Transformation mit der Bezeichnung Direktperspektivtransformation (H1-Hn) zum Durchführen einer Direktperspektivtransformation an diesem geradlinigen Leuchtdichtestrahl, wobei diese Transformation die Modelle der reellen Kameras aus den zweiten Aufbaumitteln berücksichtigt, bestehend aus den Azimuthwinkeln ($\theta$1-$\theta$n), den Kippwinkeln ($\varphi$1-$\varphi$n), den Drehwinkeln ($\Psi$1-$\Psi$n) und den Skalenfaktoren (z1-zn) der reellen Kamera (C1-Cn) entsprechend dem ausgewählten Quellenbild aus den zweiten Speichermitteln,

und Speichermitteln zum Erzeugen einer Adresse (Aq) im ausgewählten Quellenbild (I1-In) auf der Basis der Direktperspektivtransformation (H1-Hn) wobei das ausgewählte Quellenbild dem geradlinigen Leuchtdichtestrahl entspricht, und also dem Ausgangspixel der Adresse (Ao) im Targetbild (Io).

9. Anordnung nach Anspruch 8, <u>dadurch gekennzeichnet</u>, daß die Leuchtdichtebestimmungsmittel folgende Elemente enthalten:

einen Interpolator zum Berechnen eines höchstwahrscheinlichen Wertes einer Leuchtdichtefunktion (F) der Adresse (Aq) aus dem Adreßrechner im ausgewählten Quellenbild aus den Wählmitteln,

dritte Speichermittel zum Zuordnen des berechneten Leuchtdichtewertes (F) entsprechend der Adresse (Aq) im ausgewählten Quellenbild, zum Ausgangspixel im Targetbild (Io) der Adresse (Ao) aus dem Adreßgenerator.

10. Anordnung nach einem oder mehreren der vorangehenden Ansprüche 5 bis 9, <u>dadurch gekennzeichnet</u>, daß das Aufbausystem des Targetbildes (Io) ebenfalls folgende Elemente enthält:

eine Schnittstelle (2), die es einem Benutzer ermöglicht, die Parameter der virtuellen Kamera (Co) zu definieren, wobei diese Parameter den Skalenfaktor (zo) und die Orientierung der optischen Achse ($\theta$o, $\varphi$o, $\Psi$o) enthalten.

**11.** Anordnung nach Anspruch 10, <u>dadurch gekennzeichnet</u>, daß die Benutzerschnittstelle (2) automatisch oder von Hand bedienbar ist.

**12.** Anordnung nach einem oder mehreren der Ansprüche 5 bis 11, <u>dadurch gekennzeichnet</u>, daß sie außerdem ein Wiedergabesystem mit einem Schirm zum Anzeigen des Targetbildes (Io) in Echtzeit am Schirm (10) enthält.

**13.** Anordnung nach einem oder mehreren der vorangehenden Ansprüche 5 bis 12, <u>dadurch gekennzeichnet</u>, daß sie außerdem ein Aufzeichnungssystem zum Aufzeichnen des Targetbildes (Io) enthält.

**14.** Überwachungsanordnung mit einer Bildverarbeitungsanordnung nach einem oder mehreren der vorangehenden Ansprüche 5 bis 13.

## Claims

**1.** A method of processing images for constructing a target image (Io) from adjacent images having a fixed frame line and referred to as source images (I1, ..., Ii, Ij, ..., In), said source images having substantially common view points, characterized in that the method comprises the steps of:

a) digitizing the images,
b) determining a view point (P), which is common for said source and target images, and a fixed orthonormal mark (Px, Py, Pz) having said common view point (P) as its origin,
c) generating, pixel by pixel, an address (Ao) for each pixel of the target image (Io) so as to cover the entire target image (Io),
d) determining, on the basis of an address (Ao) of an initial pixel (m') in the target image (Io), an orientation in the fixed orthonormal mark (Px, Py, Pz) of a rectilinear light ray (PM) passing through this initial pixel (m') and through said common view point (P),
e) selecting a source image (Ij) traversed by this rectilinear light ray (PM),
f) determining, on the basis of the orientation of said rectilinear light ray (PM), an address (Aq) of a point (m) corrected for distortion in said selected source image (Ij) corresponding to the initial pixel (m'),
g) determining a luminance value (F) at this point (m) corrected for distortion in the selected source image (Ij),
h) assigning said luminance value (F) of the pixel (m) corrected for distortion to the initial pixel (m') in the target image (Io),
i) repeating the steps d) to h) for each pixel of the target image (Io).

**2.** A method as claimed in claim 1, characterized in that it comprises calibration steps including:

storing the parameters of the source images, including the scale factors (z1, ..., zn) and the angles of orientation constituted by the azimuth angles ($\theta$1, ..., $\theta$n), the angles of sight ($\phi$1, ..., $\phi$n) and the angles of rotation ($\Psi$1, ..., $\Psi$n) of the optical axes of the source images, said angles being defined in said fixed orthonormal mark (Px, Py, Pz),
constructing the real camera models for providing said source images with said view point which is substantially common with the origin of said fixed orthonormal mark, and for correcting aberrations in said source images,
storing the target image parameters, including a scale factor (zo) and the angles of orientation constituted by an azimuth angle ($\theta$o), an angle of sight ($\phi$o) and an angle of rotation ($\Psi$o) of the optical axis of the target image, said angles being defined in said fixed orthonormal mark (Px, Py, Pz),
and constructing a virtual camera model for providing said target image with said view point which is substantially common with that of the source images.

**3.** A method as claimed in claim 2, characterized in that

the step of determining the position of the rectilinear light ray (PM) in said orthonormal mark comprises a perspective geometrical transform referred to as inverse perspective transform (Ho$^{-1}$) which takes the virtual camera model into account,

the step of determining the address (Aq) of said distortion-corrected point (m) corresponding to the initial pixel (m') comprises perspective geometrical transforms (H1-Hn) referred to as direct perspective transforms which, in accordance with said selected source image (Ij), take the respective corresponding real camera model into account.

4. A method as claimed in any one of claims 1 to 3, characterized in that

the step of determining a luminance value (F) at said distortion-corrected point (m) in said selected source image (Ij) includes an interpolation for determining a most probable value of a luminance function at the address (Aq) in the selected source image (Ij).

5. An image-processing device comprising:

a system of n fixed real cameras (C1, ..., Ci, Cj, ..., Cn) arranged in such a way that their individual fields of view merge so as to form a single wide-angle field of view for observation of a panoramic scene, said real cameras furnishing adjacent images referred to as source images,
an image construction system simulating a mobile, virtual camera (Co) continuously scanning the panoramic scene so as to form a sub-image referred to as target image (Io) corresponding to a selected section of the wide-angle field of view and constructed from said source images (I1, ..., Ii, Ij, ..., In) furnished by the n real cameras,

characterized in that this image-processing device comprises:

means for digitizing said source and target images,
calibration means for determining a view point (P), which is common for these images, and a fixed orthonormal mark (Px, Py, Pz) having said common view point as its origin,
an address generator for generating, pixel by pixel, respective addresses for the pixels of said target image (Io) so as to cover the entire target image (Io),
an address computer for computing, on the basis of an address (Ao) of a current pixel referred to as initial pixel (m') in the target image (Io), an orientation, in said fixed orthonormal mark, of a rectilinear light ray (PM) passing through said initial pixel (m') and through said common view point (P), for selecting a source image (Ij) traversed by said rectilinear light ray (PM), and for computing, on the basis of the orientation of said rectilinear light ray (PM), an address (Aq) of a point (m) corrected for distortion in said selected source image (Ij), said distortion-corrected point (m) corresponding to the initial pixel (m'),
and means (112, 117) for determining a luminance value (F) at the address (Aq) found at said distortion-corrected point in the source image (I1-In) and for assigning this luminance value (F) to the initial pixel (m') at the address (Ao) in the target image (Io).

6. A device as claimed in claim 5, characterized in that the calibration means also comprise:

first means (210) for storing the parameters relating to said virtual camera for supplying the address computer with a scale factor (zo) and the angles of orientation of the optical axis of said virtual camera (Co) in said fixed orthonormal mark (Px, Py, Pz) which is independent of the cameras, i.e. the angles of orientation constituted by an azimuth angle ($\theta$o), an angle of sight ($\phi$o) and an angle of rotation ($\Psi$o);
second means (21.1-21.n) for storing the parameters relating to said real cameras (C1-Cn) for supplying said address computer with a scale factor (zl-zn) and the angles of orientation of the optical axis of each real camera (C1, ..., Ci, Cj, Cn), i.e. the angles of orientation constituted by the azimuth angles ($\theta$1-$\theta$n), the angles of sight ($\phi$1-$\phi$n) and the angles of rotation ($\Psi$1-$\Psi$n) defined in said fixed orthonormal mark;
an address generator (113) for generating, pixel by pixel, the addresses (Ao) of the pixels of the target image (Io), pixel by pixel, so as to cover the entire target image (Io), the address computer (200) determining the selected source image (Ij) and the point at the address (Aq) in this selected source image, which corresponds to each pixel of the target image (Io), on the basis of the parameters of the virtual camera and the real cameras.

7. A device as claimed in claim 6, characterized in that the address computer comprises:

first means for constructing a model (MCo) of the virtual camera with a projection via said view point (P), and second means for constructing models (MC1-MCn) of the real cameras with a projection via said view point (P) and with corrections of distortions.

**8.** A device as claimed in claim 7, characterized in that the address computer comprises:

first means for computing a geometrical transform referred to as inverse perspective transform ($H_o^{-1}$) to be applied to the initial pixel (m') at an address (Ao) of the image (Io) of the virtual camera (Co), in which inverse perspective transform ($H_o^{-1}$) the model of the virtual camera (MCo) provided by the first construction means and the parameters constituted by the azimuth angle ($\theta$o), the angle of sight ($\phi$o), the angle of rotation (to) and the scale factor (zo) of said virtual camera provided by said first storage means are taken into account for determining, on the basis of said inverse perspective transform ($H_o^{-1}$), the position in said fixed orthonormal mark of the rectilinear light ray passing through this initial pixel (m') and said view point (P),

means for storing the position of the rectilinear light ray obtained by the inverse perspective transform ($H_o^{-1}$),

means for selecting a source image (I1-In) traversed by this rectilinear light ray,

second means for computing a geometrical transform referred to as direct perspective transform (H1-Hn) to be applied to this rectilinear light ray, in which direct perspective transform the models of the real cameras provided by the second construction means, constituted by the azimuth angles ($\theta$1-$\theta$n), the angles of sight ($\phi$1-$\phi$n), the angles of rotation ($\Psi$1-$\Psi$n) and the scale factors (zl-zn) of the real camera (C1-Cn) corresponding to the selected source image, provided by said second storage means are taken into account,

and storage means for supplying, on the basis of said direct perspective transform (H1-Hn), an address (Aq) in the selected source image (I1-In) which corresponds to the rectilinear light ray and thus to the initial pixel of the address (Ao) in the target image (Io).

**9.** A device as claimed in claim 8, characterized in that the means for determining the luminance comprise:

an interpolator for computing a most probable value of a luminance function (F) at the address (Aq) found by the address computer in the selected source image furnished by the selection means,

third storage means for assigning the computed luminance value (F) corresponding to the address (Aq) found in the selected source image to the initial pixel in the target image (Io) at the address (Ao) furnished by the address generator.

**10.** A device as claimed in any one of claims 5 to 9, characterized in that the system for constructing the target image (Io) also comprises:

an interface (2) for enabling a user to define said parameters of the virtual camera (Co), which parameters include the scale factor (zo) and the orientation of the optical axis ($\theta$n, $\phi$o, $\Psi$o).

**11.** A device as claimed in claim 10, characterized in that the user interface (2) is controlled automatically or manually.

**12.** A device as claimed in any one of claims 5 to 11, characterized in that it also comprises a display system with a screen for displaying the target image (Io) in real time on said screen (10).

**13.** A device as claimed in any one of claims 5 to 12, characterized in that it also comprises a recording system for recording the target image (Io).

**14.** A monitoring device provided with an image-processing device as claimed in any one of claims 5 to 13.

FIG. 1B

FIG. 1A

FIG. 1C

FIG. 1D

FIG. 1E

FIG. 1F

FIG. 1G

FIG. 2

FIG. 3

FIG. 4

FIG. 5A

FIG. 5B

FIG. 6

FIG. 7A

FIG. 7B

FIG. 7C

FIG. 7D